# FASCICULE DE BREVET EUROPEEN

(11) **EP 3 173 214 B1**
(45) Date de publication et mention de la délivrance du brevet: **25.07.2018**
(21) Numéro de dépôt: 16199934.7
(22) Date de dépôt: 22.11.2016
(51) Int. Cl.: B29C 64/209, B29C 64/106

(54) **BUSE D'EXTRUSION DE MATIÈRES FONDUES NON MÉTALLIQUES**
EXTRUSIONSDÜSE FÜR GESCHMOLZENE NICHT-METALLISCHE MATERIALIEN
EXTRUSION NOZZLE FOR NON-METALLIC MOLTEN MATERIALS

(30) Priorité: 25.11.2015 FR 1502467
(43) Date de publication de la demande: 31.05.2017
(73) Titulaire: Soulier, Lionel, 50270 Les Moitiers d'Allonne (FR)
(72) Inventeur: Soulier, Lionel, 50270 Les Moitiers d'Allonne (FR)
(74) Mandataire: Célanie, Christian

(56) Documents cités:
- EP-A1- 2 277 632
- WO-A1-2015/126431
- CN-A- 104 526 174

## Description

Le secteur technique de la présente invention est celui des appareils d'extrusion de matières non métalliques en fusion par dépôt de fil en fusion.

Le procède de fabrication par dépôt de fil en fusion dénommé imprimante 3D est connu depuis plusieurs décennies. Parmi les applications, on connaît l'apport de matières plastiques fondues comme ABS, ou PLA, polyamide.

Ce procédé présente l'inconvénient de par son principe de soudure de réduire entre les couches de matières les propriétés mécaniques, en particulier le module d'élasticité, dans des proportions dépassant la moitié des performances obtenues par injection.

Cet inconvénient limite l'application pour des pièces techniques, même avec des matériaux renforcés tels que les PBT fibre de verre, PLA fibre de carbone.

Les principales causes de cet effondrement des propriétés mécaniques sont pour les polymères semi cristallins la température de l'interface trop basse, donc une recristallisation partielle de chaque face avant diffusion moléculaire et d'autre part une insuffisance de pression sur les parties en contact.

Le renforcement avec des fibres, l'incompatibilité de polymères, la pollution superficielle des couches contribue à l'insuffisance de la tension de surface.

Le brevet WO 2015126431 décrit une buse d'extrusion de matière fondue. Ce brevet met en oeuvre une torche plasma juxtaposé à la buse d'extrusion du polymère fondu. Toutefois, du fait de ce positionnement, le traitement ne peut se faire que sur une direction unique. D'autre part, la faible pénétration des espèces actives limite l'efficacité du traitement.

La présente invention a pour but de remédier aux inconvénients précités en combinant des technologies connues de traitement de surface, par PLASMA ou effet CORONA et un de soudage par ultrason.

L'invention a donc pour objet une buse d'extrusion de matières fondues non métalliques pour fabrication additive, caractérisée en ce qu'elle comprend en combinaison un ensemble ultrasonore et une chambre d'ionisation coopérant simultanément, ladite chambre d'ionisation étant coaxiale à l'axe de la buse, l'extrémité étant munie d'un disque de distribution terminé par une filière, les matières fondues étant traitées à son embouchure par le champ ultrasonore et le gaz ionisé.

La synergie de la combinaison objet de l'invention apporte ainsi une amélioration du traitement dans la masse des matières fondues sur plusieurs centaines de couches moléculaires.

Selon une caractéristique de la présente invention, la buse est percée de deux canaux de part et d'autre de l'axe de la buse jusqu'au disque de distribution avant la filière de dépôt.

Avantageusement, l'ensemble ultra sonore est composé d'un convertisseur piézoélectrique ou magnétostrictif résonnant à une fréquence comprise entre 15 et 80 KHz, de préférence égale à 25 KHz.

Selon une autre caractéristique de la présente invention, la chambre d'ionisation est alimentée tangentiellement en gaz de manière à obtenir un vortex.

Selon encore une autre caractéristique de la présente invention, la chambre d'ionisation comporte une électrode annulaire portée à un potentiel positif, recouvrant un tube diélectrique et formant ainsi une décharge à barrière diélectrique (DBD).

Avantageusement, la buse comporte des raccords de tuyaux flexibles, lesdits raccords étant situés sur le point nodal de résonance de la buse.

Selon encore une autre caractéristique de la présente invention, la buse comporte un joint torique en caoutchouc ou élastomère d'une dureté comprise entre 65 et 80 Shore A isolant mécaniquement la buse de la chambre d'ionisation.

Selon encore une autre caractéristique de la présente invention, la buse comporte une jupe coaxiale mise en dépression pour capter les gaz corrodants comme l'ozone.

Avantageusement, la production de gaz ionisé est créée autour de la buse, formant ainsi une couronne sur le plan de dépôt de la matière d'apport et de la couche précédente.

Un tout premier avantage de la présente invention réside dans l'effet de synergie de la combinaison proposée afin d'améliorer la cohésion des différentes couches de matériau déposé.

Un autre avantage encore de l'invention réside dans la fusion et la cristallisation simultanée des couches successives.

Un autre avantage encore de l'invention réside dans la pénétration dans la pénétration des espèces actives du gaz ionisé dans les différentes couches.

D'autres caractéristiques, détails et avantages de l'invention seront mieux compris à la lecture du complément de description qui va suivre en relation avec des dessins sur lesquels :
- la figure 1 est une coupe de la buse d'extrusion,
- la figure 2 est une vue détaillée de la buse d'extrusion,
- la figure 3 est une vue montrant le positionnement de la buse par rapport à une pièce en construction, et
- la figure 4 est une coupe suivant F de la figure 3.

L'invention va maintenant être décrite avec plus de détails.

Comme indiqué précédemment, l'invention repose sur la production de gaz ionisé autour d'une buse en formant une couronne sur le plan de dépôt de la matière d'apport sur la couche précédente.

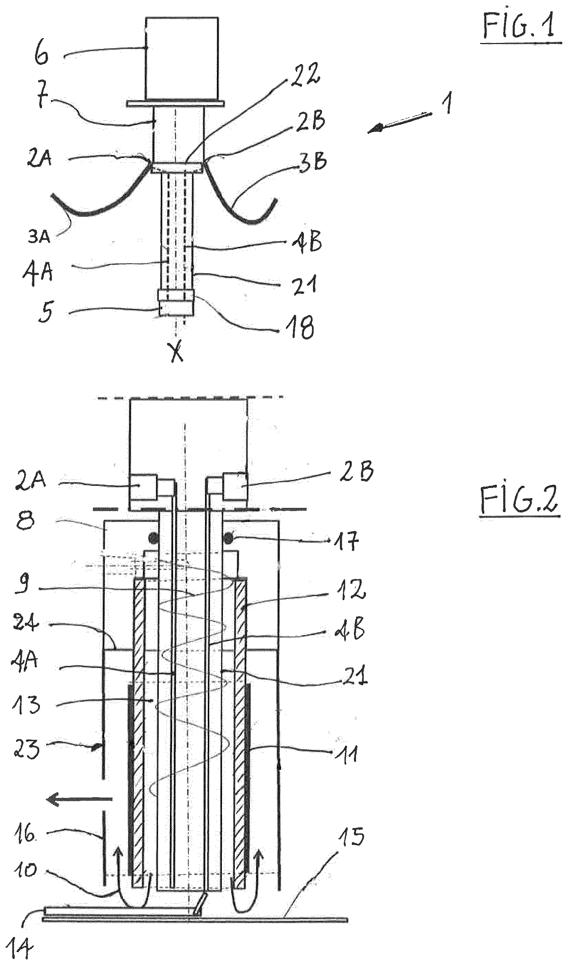

Sur la figure 1, on a représenté une vue d'ensemble de la buse d'extrusion 1 pour fabrication additive de matière additive. Cette buse d'extrusion 1 comprend un convertisseur d'oscillation 6 surmontant un amplificateur d'amplitude 7 ou booster et un corps 21 de la buse. Un plateau d'introduction 22 de matière additive est prévu entre l'amplificateur et le corps et comporte deux entrées 2A et 2B de matières fondues. Ces entrées sont connectées chacune à deux tuyaux flexibles 3A et 3B pour l'alimentation par exemple par deux extrudeuses conventionnelles (non représentées). Le corps 21 est prolongé à son extrémité libre par un disque de distribution 18 de matière et une filière 5 de dépôt de matière.

Le corps 21 de la buse d'extrusion 1 est percée de deux canaux 4A et 4B de part et d'autre de l'axe X de la buse pour amener la matière additive jusqu'au disque de distribution 18 prolongé par la filière 5 de dépôt de matière. Les entrées 2A et 2B des tuyaux flexibles 3A et 3B sont situées sur le point nodal de résonance de la buse.

La buse d'extrusion 1 est excitée par l'ensemble composé du convertisseur 6 d'oscillations électriques générant des vibrations mécaniques et l'amplificateur 7 d'amplitude ou booster. Cet ensemble oscille à une fréquence comprise entre 15 et 80 KHz et de préférence 25 KHz. Il va de soi que cet ensemble est relié à un générateur électrique non représenté.

La figure 2 représente plus spécifiquement le réacteur plasma 23 comprenant une virole 8 en matériau isolant par exemple PTFE ou PEEK. Le réacteur 23 est alimenté en gaz sous pression par une admission tangentielle 9 sur le corps 21 de la buse 1 donnant un effet vortex au flux de gaz 10.

Le réacteur comprend une électrode annulaire 11 fixée sur un tube diélectrique 12 et reliée à un générateur (non représenté). Cette électrode 11 est l'électrode positive du réacteur. Ce tube diélectrique 12 entoure le corps 21 de la buse et est placé à distance de ce corps. Ce tube 12 est réalisé par exemple en quartz, alumine ou nitrure de bore.

L'électrode 11 est portée à un potentiel positif et reliée à la masse en formant une décharge à barrière diélectrique (DBD) en volume. Le corps 21 de la buse constitue l'électrode négative du réacteur et ce corps est relié à la masse.

Le champ électrique entre les électrodes positive et négative disposées sur le trajet transverse oblique de l'admission tangentielle du flux de gaz 10 l'excite sous la forme d'un annulaire 13. Le flux est projeté sur 360° en partie sur la couche en formation 14 et sur la couche précédente 15. Une jupe 16 bornée par la paroi transversale 24 est mise en dépression pour évacuer les gaz corrodants comme l'ozone. Cette jupe 16 forme une tuyère de projection des gaz ionisés sous forme plasma.

Un joint torique 17 isole mécaniquement la buse 1 de l'ensemble du réacteur plasma 8. Ce joint est par exemple réalisé en caoutchouc ou élastomère ayant une dureté comprise entre 65 et 80 Shore A.

Le fonctionnement est le suivant. On injecte la matière additive par les tuyaux flexibles 3 selon qu'on souhaite l'entrée 2A ou 2B et en conséquence les canaux 4A ou 4B. La matière est entraînée sous pression à travers la filière 5 pour être déposée en couches successives. Au cours de ce dépôt, on combine l'action du plasma sur 360° et l'action de la buse d'extrusion 1 résonnante soumise à un champ ultra sonore. La friction moléculaire produite par le champ ultrasonore échauffe l'interface des deux couches traitées simultanément par le gaz ionisé et permet leur fusion et leur cristallisation simultanée. Il en est de même lorsqu'on procède au dépôt de la couche suivante.

D'autre part la déformation de la surface du polymère utilisé produite par la vibration mécanique permet une meilleure pénétration des espèces actives du gaz ionisé dans ce matériau polymère.

La combinaison selon l'invention permet de préparer la matière fondue à l'instant de son dépôt sur la couche précédente. Le gaz ionisé active les couches moléculaires de surface, et l'action mécanique du champ ultra sonore échauffe localement l'interface.

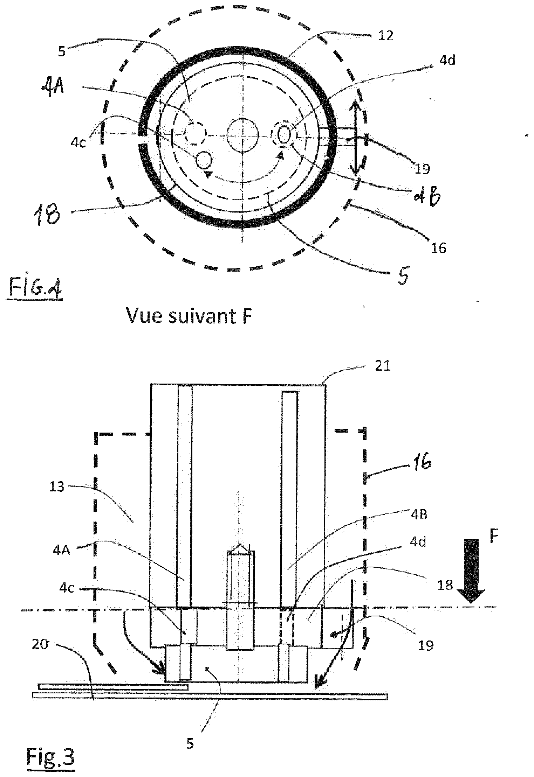

La figure 3 représente la distribution des matières sur la pièce en construction 20 par la buse 1 au niveau de la jupe 16. Comme indiqué précédemment, le corps 21 de la buse 1 est terminé par une filière 5 précédée du disque 18 muni des perforations décalées 4C et 4D. Ce disque 18 permet par rotation au moyen d'un actionneur 19 d'obturer soit le canal 4A et laisser ouvert le canal 4B pour l'aligner avec la perforation 4D et inversement. Bien entendu, dans une position intermédiaire du disque 18, les deux canaux 4A et 4B peuvent être fermés.

Sur la figure 4, qui est une coupe de la figure 3 suivant la flèche F, on a représenté l'assemblage de la filière 5 et du disque de distribution 18. On retrouve la jupe 16, le tube diélectrique 12, les perforations 4C et 4D du disque de distribution 18 et son actionneur 19 pour lui imprimer un mouvement de rotation. On a représenté en pointillé la filière 5 et la projection de la trace des canaux 4A et 4B. On voit que la mise en rotation du disque de distribution 18 fait correspondre les différents canaux 4 selon l'extrudeuse utilisée. Ainsi, on voit que perforation 4D est alignée avec le canal 4B, ce qui correspond à la mise en fonction de l'extrudeuse reliée au tuyau 3B pour la délivrance de la matière additive. On voit également que la perforation 4C n'est pas alignée avec le canal 4A, l'extrudeuse reliée au tuyau 3A étant inactive.

## Revendications

1. Buse (1) d'extrusion de matières fondues non métalliques pour fabrication additive, qui comprend une chambre d'ionisation, **caractérisée en ce qu'**elle comprend en combinaison un ensemble ultrasonore (1, 6, 7) et la chambre d'ionisation (13) coopérant simultanément, ladite chambre d'ionisation (13) étant coaxiale à l'axe de la buse (1), l'extrémité de la buse étant munie d'un disque de distribution (18) terminé par une filière (5), les matières fondues étant traitées à son embouchure par le champ ultrasonore et le gaz ionisé.

2. Buse (1) d'extrusion selon la revendication 1, **caractérisée en ce qu'**elle est percée de deux canaux (4A, 4B) de part et d'autre de l'axe de la buse jusqu'au disque de distribution (18) avant la filière de dépôt (5).

3. Buse (1) d'extrusion selon la revendication 1 ou 2, **caractérisée en ce que** l'ensemble ultra sonore (1, 6, 7) est composé d'un convertisseur piézoélectrique ou magnétostrictif résonnant à une fréquence comprise entre 15 et 80 KHz, de préférence 25 KHz.

4. Buse (1) d'extrusion selon l'une quelconque des revendications 1 à 3, **caractérisée en ce que** la chambre d'ionisation (13) est alimentée tangentiellement en gaz de manière à obtenir un vortex.

5. Buse (1) d'extrusion selon l'une des revendications 1 à 4, **caractérisée en ce que** la chambre d'ionisation (13) comporte une électrode annulaire (11) portée à un potentiel positif et recouvrant un tube diélectrique (12) et formant ainsi une décharge à barrière diélectrique (DBD).

6. Buse (1) d'extrusion suivant la revendication 3, **caractérisée en ce qu'**elle comporte des raccords (2A, 2B) de tuyaux flexibles (3A, 3B), lesdits raccords étant situés sur le point nodale de résonance de la buse.

7. Buse (1) d'extrusion selon l'une quelconque des revendications précédentes, **caractérisée en ce qu'**elle comporte un joint torique (17) en caoutchouc ou élastomère d'une dureté comprise entre 65 et 80 Shore A isolant mécaniquement la buse de la chambre d'ionisation (13).

8. Buse (1) d'extrusion suivant les revendications précédentes, **caractérisée en ce qu'**elle comporte une jupe coaxiale (16) mise en dépression pour capter les gaz corrodants comme l'ozone.

9. Buse (1) d'extrusion suivant les revendications précédentes, **caractérisée en ce que** la production de gaz ionisé est créée autour de la buse, formant ainsi une couronne sur le plan de dépôt de la matière d'apport et de la couche précédente.

## Patentansprüche

1. Düse (1) zur Extrusion von geschmolzenen, nichtmetallischen Materialien für additive Herstellung, dass eine Ionisationskammer enthalt, **dadurch gekennzeichnet, dass** sie in Kombination eine Ultraschallbaugruppe (1, 6, 7) und eine gleichzeitig zusammenwirkende Ionisationskammer (13) aufweist, wobei die genannte Ionisationskammer (13) koaxial zu der Achse der Düse (1) ist, wobei das Ende der Düse mit einer Verteilerscheibe (18) versehen ist, welche durch eine Spinndüse (5) beendet wird, wobei die geschmolzenen Materialien an ihrer Mündung durch das Ultraschallfeld und das ionisierte Gas behandelt werden.

2. Extrusionsdüse (1) nach Anspruch 1, **dadurch gekennzeichnet, dass** sie von zwei Kanälen (4A, 4B) beiderseits der Achse der Düse bis zu der Verteilerscheibe (18) vor der Ablagespinndüse (5) durchbrochen ist.

3. Extrusionsdüse (1) nach Anspruch 1 oder 2, **dadurch gekennzeichnet, dass** die Ultraschallbaugruppe (1, 6, 7) aus einem piezoelektrischen oder magnetostritiven Umwandler besteht, welcher mit einer Frequenz zwischen 15 und 80 KHz, vorzugsweise 25 KHz, schwingt.

4. Extrusionsdüse (1) nach irgendeinem der Ansprüche 1 bis 3, **dadurch gekennzeichnet, dass** die Ionisationskammer (13) tangential mit Gas versorgt wird, um einen Wirbel zu erzielen.

5. Extrusionsdüse (1) nach einem der Ansprüche 1 bis 4, **dadurch gekennzeichnet, dass** die Ionisationskammer (13) eine ringförmige Elektrode (11) umfasst, welche an einem positiven Potential liegt und ein dielektrisches Rohr (12) überdeckt und so eine dielektrische Barriereentladung (DBE) bildet.

6. Extrusionsdüse (1) nach Anspruch 3, **dadurch gekennzeichnet, dass** sie Anschlüsse (2A, 2B) von flexiblen Schläuchen (3A, 3B) umfasst, wobei die genannten Anschlüsse an dem Resonanz-Knotenpunkt der Düse angeordnet sind.

7. Extrusionsdüse (1) nach irgendeinem der vorhergehenden Ansprüche, **dadurch gekennzeichnet, dass** sie einen O-Ring (17) aus Kautschuk oder Elastomer mit einer Härte zwischen 65 und 80 Shore A umfasst, welcher die Düse mechanisch von der Ionisationskammer (13) isoliert.

8. Extrusionsdüse (1) nach den vorhergehenden Ansprüchen, **dadurch gekennzeichnet, dass** sie eine koaxiale Schürze (16) umfasst, welche mit Unterdruck versehen ist, um korrodierende Gase, wie Ozon, aufzufangen.

9. Extrusionsdüse (1) nach den vorhergehenden Ansprüche, **dadurch gekennzeichnet, dass** die Produktion von ionisierendem Gas um die Düse herum gebildet wird, was so einen Ring in der Ablageebene des Einbringungsmaterials und der vorhergehenden Schicht bildet.

## Claims

1. An extrusion nozzle (1) for non-metallic molten materials for additive manufacturing, comprising an ionisation chamber, **characterised in that** it comprises, in combination, an ultrasonic assembly (1, 6, 7) and the ionisation chamber (13) cooperating simultaneously, said ionisation chamber (13) being coaxial to the axis of the nozzle (1), the extremity of the nozzle being provided with a distribution disk (18) topped by a die (5), the molten materials being treated at its mouth by the ultrasound field and the ionised gas.

2. An extrusion nozzle (1) according to Claim 1, wherein it is pierced by two ducts (4A, 4B) passing through the axis of the nozzle and reaching the distribution disk (18) before the deposition die (5).

3. An extrusion nozzle (1) according to Claims 1 or 2, wherein the ultrasonic assembly (1, 6, 7) is composed of a piezoelectric or magnetostrictive transducer resonating at a frequency of between 15 and 80 KHz, and preferably of 25 KHz.

4. An extrusion nozzle (1) according to any one of Claims 1 to 3, wherein the ionisation chamber (13) is tangentially supplied with gas so as to obtain a vortex.

5. An extrusion nozzle (1) according to any one of Claims 1 to 4, wherein the ionisation chamber (13) incorporates an annular electrode (11) carried on a positive potential and covering a dielectric tube (12) thereby forming a dielectric barrier discharge (DBD).

6. An extrusion nozzle (1) according to Claim 3, wherein it incorporates connectors (2A, 2B) for flexible tubing (3A, 3B), said connectors being located on the resonance nodal point of the nozzle.

7. An extrusion nozzle (1) according to any one of the above Claims, wherein it incorporates an O-ring (17) made of rubber or elastomer with a Shore A hardness of between 65 and 80 mechanically isolating the nozzle from the ionisation chamber (13).

8. An extrusion nozzle (1) according to the above Claims, wherein it incorporates a coaxial skirt (16) that is depressurised so as to capture the corrosive gases such as ozone.

9. An extrusion nozzle (1) according to the above Claims, wherein the production of ionised gas is created around the nozzle, thereby forming a crown on the plane of deposition of the extrudate material and the previous layer.
